# EUROPEAN PATENT SPECIFICATION

(11) **EP 1 169 272 B1**
(45) Date of publication and mention of the grant of the patent: **03.07.2002**
(21) Application number: 00922503.8
(22) Date of filing: 08.03.2000
(51) Int. Cl.: C03B 23/023

(54) **HEAT RESISTANT COVERING MATERIAL**
HITZEBESTÄNDIGES BEDECKUNGSMATERIAL
MATIERE DE PROTECTION RESISTANT A LA CHALEUR

(30) Priority: 09.04.1999 EP 99201156; 09.04.1999 EP 99201083
(43) Date of publication of application: 09.01.2002
(60) Divisional application: 02075927.0
(73) Proprietor: N.V. BEKAERT S.A., 8550 Zwevegem (BE)
(72) Inventor: VAN STEENLANDT, Wim, B-9100 St. Niklaas (BE); VANHUYSSE, Boudewijn, B-9860 Scheldewindeke (BE)
(86) International application number: EP0001981
(87) International publication number: WO0061508

(56) References cited:
- WO-A-98/33406
- FR-A- 2 739 616
- US-A- 5 395 683

## Description

### Field of the invention.

The invention relates to a covering material, resistant to high temperatures and intended to be inserted between tools and plates of hot glass during glass heating, bending or tempering processes.

### Background of the invention.

Various covering materials have been proposed in the literature.

As a matter of example, EP 0447785 discloses covering materials for glass bending moulds.

In EP 0312439 and FR 2739616, covering materials based on high temperature resistant fibers have been described. These covering materials are adapted to cover tools such as carrier rings and machinery parts, contacting glass during bending and tempering processes. However, since the working temperature of such covering materials may rise up to 700°C, synthetic fibers such as polyaramides or even blends of polyaramides with metal fibers does not resist such temperatures for longer periods. These synthetic fibers or blends of them with metal fibers degenerate above 400°C, So these blends are to be used in environments with a lower temperature.

Also covering materials which comprise metal fibers to cover transporting rollers are known in the art, e.g. from US 5565013.

Usually, for temperatures above 400°C, covering materials provided by using metal fibers are applied, because of the good resistance against mechanical actions of the glass on the surface of the covering material, during the use of the covering material at high temperatures. However, when a metal fiber covering material is too cold, compared to the temperature of the hot glass plate, the contact of the colder covering material with the heated glass plate can cause spontaneously tempering. This means that thermal energy is drained away from the glass at the contacting points, due to the good thermal conductivity of the metal fibers, causing local tensions in the glass. This can lead to glass breakage during further process and use of the glass. As an example, such heat differences can appear when using metal fiber covering materials on tempering rings or on moulds, on which glass plates are formed, standing outside the furnace, in which the glass is heated. This latter technique of molding glass plates is called "out of furnace" bending.

Other covering materials known in the art are provided using glass fibers. These covering materials do not have a thermal conductivity that can lead to spontaneously tempering, but they do not resist for long time the repetitive mechanical actions of the glass on its surface.

### Summary of the invention.

The invention relates to an alternative covering material which cause less spontaneously tempering and which provides better resistance against the mechanical action of the hot glass plate against its surface.

A covering material, comprises a textile fabric which is provided by the use of poly(p-phenylene-2,6-benzobisoxazole) fibers is proposed. These fibers are provided to the textile fabric as staple or multifilament fibers, multifilament yams or spun yarns. The textile fabric comprises mainly or only poly(p-phenylene-2,6-benzobisoxazole) fibers, also known as ZYLON® from TOYOBO co. ltd.

The covering materials as subject of the invention can be used in circumstances where the temperature is not too high. Too high a temperature could cause degeneration of the poly(p-phenylene-2,6-benzobisoxazole) fibers. Such degeneration of poly(p-phenylene-2,6-benzobisoxazole) fibers was noticed for example at temperatures of 550°C after 1 hour.

The benefit of poly(p-phenylene-2,6-benzobisoxazole) fiber covering material compared to 100% metal fiber textile covering materials, is that the risk on spontaneous tempering of the glass contacting a colder covering material is limited. An extra benefit is that the weight of the covering product can be reduced.

The benefit of poly(p-phenylene-2,6-benzobisoxazole) fiber covering material compared to pure glass or ceramic fiber covering materials, is that the resistance against mechanical action on the covering material is improved, using poly(p-phenylene-2,6-benzobisoxazole) fibers.

Further, poly(p-phenylene-2,6-benzobisoxazole) fiber yams are much easier to be transformed into textile material, such as woven, braided or knitted fabrics, compared to pure glass fiber yam of metal fiber yam. Yam rupture occurs less frequently, causing less production stops. Also fiber rupture occurs less frequently providing a less hairy fabric surface.

Next to 100% poly(p-phenylene-2,6-benzobisoxazole) fiber textile fabrics, blends of poly(p-phenylene-2,6-benzobisoxazole) fibers with other temperature resistant fibers such as glass fibers, basalt fibers, ceramic fibers, C-fibers, SiC-fibers or even metal fibers may be used. Preferably more than 50% by weight of poly(p-phenylene-2,6-benzobisoxazole) fibers are used.

For blends with metal fibers, all types of metal fibers can be used. Usually, but not necessarily, stainless steel fibers are used. Alloys such as AISI 316 or AISI 316L, AISI 347, or other alloys out of the AISI 300 type are used. Also alloys out of the AISI-400 type, Aluchrome-type alloys or alloys as described in US-4597734 can be used. These fibers can be bundle drawn, as described in patent US-A-3379000, or can be made by shaving them from a coil, as described in patent US-A-4930199 or can be melt extracted. Also metal fibers produced as described in JP 62260018 can be used.

With the term "blend" is meant that different fibers are intimately blended and used to provide a single yam, which is eventually plied, or a multiplied yarn, consisting of different single yams, each single yam comprising one or more different fiber materials. Also to be understood as "blend" is the use of different yams, each yam consisting of a specific fiber, when these yams are transferred in a textile fabric simultaneously, or when these yams are twined, so a 2- or more ply yam is obtained.

According to the present invention, it is sufficient that only one side of the textile fabric, which preferably is to contact the hot glass, comprise poly(p-phenylene-2,6-benzobisoxazole) fibers as described above. Alternatively, the two outer surfaces may comprise a different amount of poly(p-phenylene-2,6-benzobisoxazole) fibers. A person skilled in the art understands that next to these poly(p-phenylene-2,6-benzobisoxazole) fibers, other temperature resistant fibers such as glass fibers, basalt fibers, ceramic fibers, C-fibers, SiC-fibers or even metal fibers are to be used.

Various types of covering materials can be obtained by using poly(p-phenylene-2,6-benzobisoxazole) fibers.

Poly(p-phenylene-2,6-benzobisoxazole) fibers can be used to provide knitted fabrics, either weft or warp knitted fabrics. These knitted fabrics can be single or double bed knitted fabrics, obtainable on circular or flat knitting machines.

In case of double bed weft knitted fabrics, rib type knitted structures can be used to provide the knitted fabric. Such fabrics are stretchable to a large extend and are suitable to cover e.g. transport rollers, transporting the hot glass plate in the glass heating, bending and/or tempering process.
Rib type knitting structures are double bed weft knitting structures where alternately a needle on the front needle bed and a needle on the back needle bed make a stitch.

In case the covering material comprises a single bed weft knitted fabric, a single jersey type knitted fabric, e.g. "single jersey 1/3" can be used. A knitting structure "single jersey 1/3" is a single bed weft knitting structure where each row of stitches is made out of three yams. All needles in the bed are grouped per three. The first yam makes stitches on every first needle of each group of needles on the needle bed, where the second yam is knitted in the same stitch row on every second needle of each group of needles. The third yam is knitted on every third needle of each group of needles.
These knitted fabrics can be used to cover e.g. moulds against which the hot glass plat is blown or pressed.

To prevent the knitted fabric from sagging, which means the fabric tends to enlarge when hung because of its own weight, inlay yams, incorporated in the knitting structure by using tuck stitches, can be applied. To reduce the risk on impressions of the knitted fabric in the hot glass plate, e.g. by pressing, more stitches per surface unit can be applied. This can be done by using higher machine gauge or by adjusting the machine settings. The machine gauge is the number of needles per inch on the surface of the needle bed. Machine gauges of 5 to 32 can be used.

Also warp knitting fabrics are in the scope of the invention. They can be foreseen from polygonal openings, to make the knitted fabric more permeable to air. These openings are provided by using different knitting structures, using mutual transfer of stitches between adjacent stitch wales, or by using inlay yarns of fall plate techniques. Double and single bed knitted warp structures can be used. These warp knitted fabrics can be used to cover rings, which support the glass plate during tempering operation.

It is also in the scope of the invention to provide to the covering material, comprising a knitted fabric using poly(p-phenylene-2,6-benzobisoxazole) fibers, a knitted fabric which has different zones, each zone having its specific weight, thickness, air permeability and other properties, at least one zone comprising poly(p-phenylene-2,6-benzobisoxazole) fibers. In general, stitch height and stitch width, machine gauge and machine settings are to be chosen to provide properties, as an example and not restrictive, a knitted fabric density, thickness, air permeability weight and other properties as required for the application of the covering material. Machines with gauges between 5 and 32 can be applied, providing knitted fabrics with thickness between 0.1 cm and 1 cm.

A covering material as subject of the invention can also comprise a woven fabric, provided by the use of poly(p-phenylene-2,6-benzobisoxazole) fibers. Depending on the requirements by the covering material, different weaving structures, such as a plain woven structure, a satin structure, a twill structure or an atlas structure can be used to provide a woven structure comprising poly(p-phenylene-2,6-benzobisoxazole) fibers. Woven fabrics can be used to cover supporting rings or guides in glass heating, bending and tempering processes.

A covering material as subject of the invention can also comprise a braided fabric, provided by the use of poly(p-phenylene-2,6-benzobisoxazole) fibers. Depending on the requirements by the covering material, it can be braided flat of tubular. Tubular braided fabrics can e.g. be used to cover transport rollers in glass heating, bending or tempering processes.

A covering material as subject of the invention can also comprise a needle punched fabric, provided by the use of poly(p-phenylene-2,6-benzobisoxazole) fibers. Depending on the requirements by the covering material, it can be needle punched flat of tubular. Tubular needle punched fabrics can e.g. be used to cover transporting rollers in glass heating, bending or tempering processes. Flat needle punched fabrics can be used to cover supporting rings rollers in glass heating, bending or tempering processes. To improve resistance against mechanical wear, these needle punched materials can be calandered and so made more compact and dense. To increase the air permeability, they can be perforated by means of laser cutting, dye cutting or other perforating processes, known in the art. Such needle punched, perforated and eventually calandered fabrics can be used to cover tempering rings, supporting the hot glass plate during tempering processes.

The person skilled in the art understands that requirements such, as an example and not restrictive, density, thickness, weight and air permeability can be provided by choosing the correct fabric type, structures and machine settings.

The person skilled in the art also understands that, to provide knitted, woven or braided fabrics, either spun poly(p-phenylene-2,6-benzobisoxazole) fibers yam or multifilament poly(p-phenylene-2,6-benzobisoxazole) fibers can be used. The number of fibers per yarn section, the metrical number of the yams, the fiber diameter and staple length in case of staple fibers can be chosen and changed to meet the requirements of the covering material. The number of fibers per yam section can be between 4000 and 40, e.g. between 2000 and 40 or even between 1000 and 40. Metrical numbers can be chosen between 0.5 and 90, e.g. between 0.7 and 70. Staple length can vary between 20 and 200 mm. The metrical number of a yarn is the length of the yam, expresses in meter, provided by 1 gram of this yam.

Also the other fiber properties such as crimp and/or yarn properties such as e.g. torsion direction, either S or Z, single yarn or plied yam, number of torsion and twine, can be chosen in function of the requirements, demanded by the covering material. Number of torsion and/or twine is to be situated between 10 and 1000 turns per meter, best between 20 and 500, or even between 50 and 250.

All above-mentioned fabrics may be used to cover tools and machinery parts, which contact the hot glass plate during heating, bending or tempering. By covering such tools, the fabrics are inserted between the tool and the hot glass plate. Such tools are e.g. rollers, transporting the glass plate through the furnace, shuttle rings, on which the glass is pressed or dropped, or which carry the glass in heating, bending or tempering zones of the furnace. Also moulds which are pressed against the glass plate to bend it are to be understood as tools. The fabrics as subject of the invention reduce the heat which is drained away from the glass plate during contact of the tool with the glass plate. Further, the fabrics as subject of the invention resist sufficiently the mechanical action during contact of the glass with the tool.

### Brief description of the drawings.

The invention will now be described into more detail with reference to the accompanying drawings wherein
- FIGURE 1 is an enlarged view of a single jersey 1/3 knitted fabric.
- FIGURE 2 is a schematic view of a rib knitting structure.
- FIGURE 3 is an enlarged view of a single bed warp knitted structure.
- FIGURE 4 is a knitting scheme of a double bed warp knitted fabric as subject of the invention.
- FIGURE 5 is a view of an Atlas woven fabric.

### Description of the preferred embodiments of the invention.

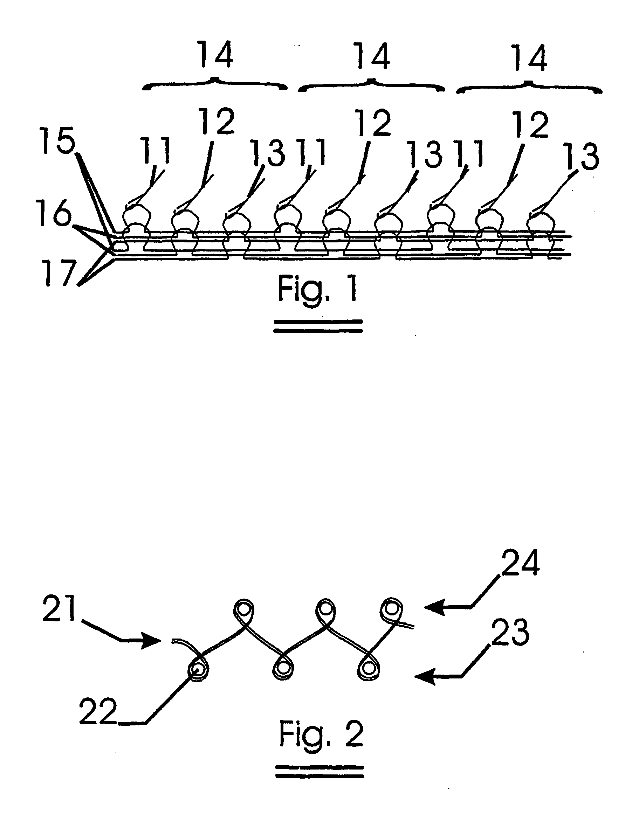

An embodiment of the invention is shown in figure 1, which is a view of a single bed weft knitting structure, called "single jersey 1/3". All needles in the needle bed are grouped per 3. Every first needle 11 of each needle group 14 knits the first yarn 15. Every second needle 12 of each needle group 14 knits the second yam 16. Every third needle 13 of each needle group 14 knits the third yam 17. The knitted fabric is so provided by using 3 yams 15, 16 and 17. A knitted fabric as subject of the invention is provided by using a circular knitting machine, gauge 12 and using poly(p-phenylene-2,6-benzobisoxazole) fiber spun yam for the yams 15, 16 and 17. These poly(p-phenylene-2,6-benzobisoxazole) fiber spun yams have a metrical number 34 .

With metrical number is meant that a yam having a metrical number of "X", is characterized in that one gram of yam has a length of "X" meter.

It is clear that alternative embodiments as subject of the invention are provided by using poly(p-phenylene-2,6-benzobisoxazole) fiber multifilament yams, having metrical numbers between 0.5 and 90, or poly(p-phenylene-2,6-benzobisoxazole) fiber spun yams with a different metrical number, e.g. between 0.5 and 90. Also other knitting structures, such as single jersey 1/2 and single jersey 1/4 can be used. Other machines, either circular or flat weft knitting machines with a gauge between 5 and 32 can be used.

An other embodiment is shown in figure 2, which shows a schematic view of a double bed weft knitting structure, being a rib structure. 2 poly(p-phenylene-2,6-benzobisoxazole) fiber multifilament yarns 21 make stitches alternately on a needle 22 of front needle bed 23 and a needle 21 on back needle bed 24. An embodiment using this knitting structure is made on a circular double bed knitting machine with gauge 16 and using poly(p-phenylene-2,6-benzobisoxazole) fiber multifilament yams of metrical number 36.

Other poly(p-phenylene-2,6-benzobisoxazole) fiber yarns, either spun or multifilament, with metrical numbers between 0.5 and 90 can be used. Double bed weft knitting machines with gauges between 5 and 32 can be used to provide alternative embodiments.

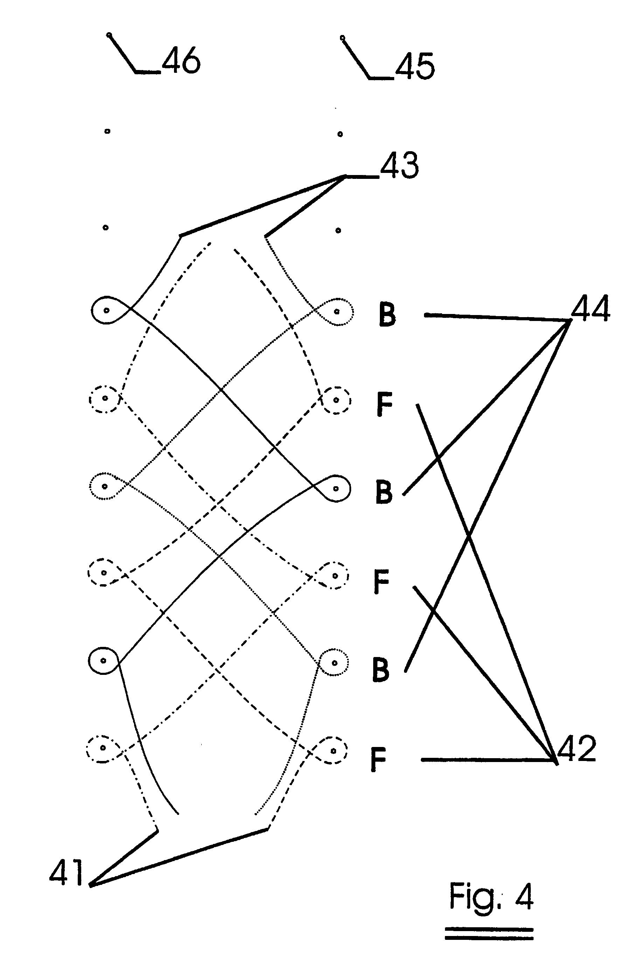

Figure 3 shows an other embodiment of the invention. It shows a part of a single bed warp knitted fabric where stitches are mutually transferred between adjacent stitch wales 31. These transfers are applied in the stitch wale zones 32, where as no connection between stitch wales are provided in the stitch wale zones 33. By alternating stitch wale zones 32 and 33, and making transfers for stitch wale zones 32 alternating to the left and right adjacent stitch wales, a single bed warp knitted fabric with polygonal openings is provided. A poly(p-phenylene-2,6-benzobisoxazole) fiber multifilament yam with metrical number 36 is used to provide an embodiment of the invention on a single bed warp knitting machine gauge 12.

Other poly(p-phenylene-2,6-benzobisoxazole) fiber yarns, either spun or multifilament, with metrical numbers between 0.5 and 90 can be used.

Double bed weft knitting machines with gauges between 5 and 32 can be used to provide alternative embodiments. Also for double bed structures, transfer between adjacent wales of stitches can be used to provide a double bed structure , having polygonal openings.

To provide a covering material as subject of the invention, it is sufficient that only one side of the textile fabric comprise poly(p-phenylene-2,6-benzobisoxazole) fibers, or that poly(p-phenylene-2,6-benzobisoxazole) fibers are present at both sides of the fabric in different contents.

A detail of a schematic view of the knitting structure as used to provide a warp knitted structure with two surfaces comprising different contents of poly(p-phenylene-2,6-benzobisoxazole) fibers, is shown in figure 4. It is a schematic view of a stitch wale portion where two adjacent wales are connected to each other. Here can be seen that yams 41, being visible at the front outer side of the fabric, are only knitted on the needles of the front needle bed 42, whereas the yams 43, being visible at the back outer side of the knitted fabric, are only knitted on the needles of the back needle bed 44. It is clear that here the mutual transfer of stitches between stitch wales can be seen. Yams 41, after having made a stitch in stitch wale 45, are transferred to stitch wale 46, where they make a stitch on its turn. At the same time, other yams 41, after having made a stitch in stitch wale 46, are transferred to stitch wale 45, where they make a stitch on its turn. The same happens with yams 43. A reverse action is done subsequently, so providing a connection between adjacent stitch wales.

To provide the knitted fabric, two different yarns were applied. As shown in figure 4, yams 12 being knitted on the front needle bed, are a blend yarn of 70% by weight poly(p-phenylene-2,6-benzobisoxazole) fibers and 30% by weight stainless steel fibers of alloy type AISI 316L. The yams 12 used to provide the front outer surface have a titer of 143 tex., the yams 14 are 100% poly(p-phenylene-2,6-benzobisoxazole) fiber spun yarns have a metrical number 34.Alternatively, a 100% metal fiber yarn, consisting of stainless steel of alloy AISI 316L and having a metrical number of 7.5 may be used as yarn 14.

Other warp knitting structures, either single or double bed knitting structures, can be used to provide alternative embodiments. E.g. inlay yams or fall plate techniques can be used to connect adjacent wales to each other.

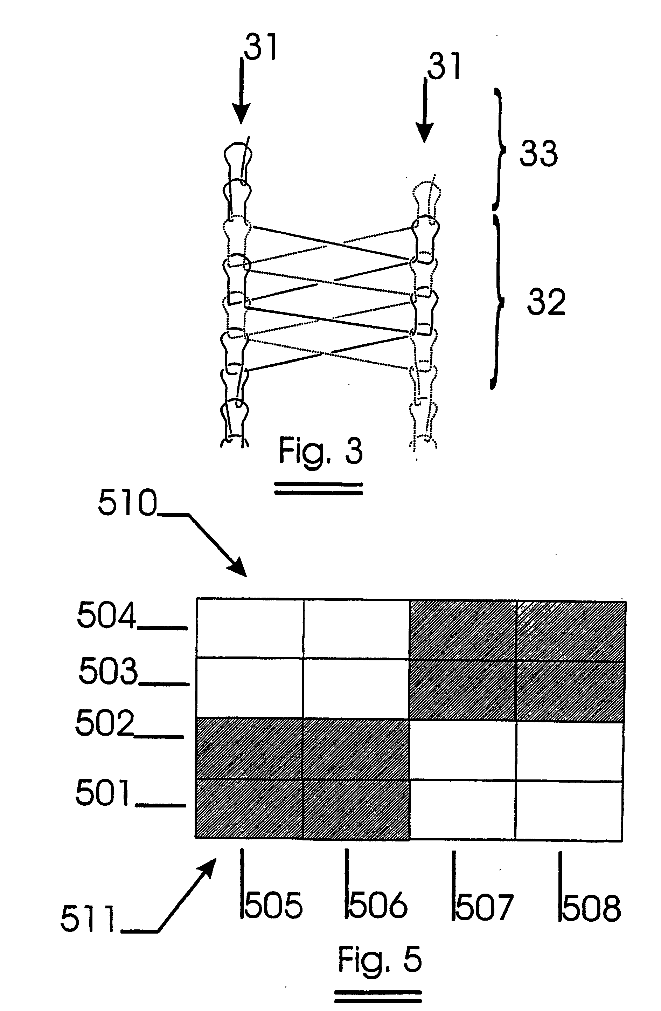

An other embodiment of the invention is provided by weaving a poly(p-phenylene-2,6-benzobisoxazole) fiber multifilament yarn, e.g. using a weaving structure called "Atlas weaving structure" as shown in figure 5. Weft yams 501 and 502 are to be seen on the front side of the fabric 510, above the warp yarns 505 and 506. Weft yams 501 and 502 are beyond warp yams 507 and 508, so they are to be seen on the back side 511 of the fabric. Weft yams 503 and 504 are beyond warp yams 505 and 506, so to be seen on the back side 511, whereas they are above warp yarns 507 and 508, so they are to be seen on the front side 510.
An embodiment of the invention is provided using a poly(p-phenylene-2,6-benzobisoxazole) fiber multifilament yam with metrical number 36.

It is clear that other weaving structures, such as e.g. a plain weaving structure, a satin structure or a twill structure provides alternative embodiments of the invention.

Other poly(p-phenylene-2,6-benzobisoxazole) fiber yarns, either spun or multifilament, with metrical numbers between 0.5 and 90 can be used.

## Claims

1. Use of a covering material, said covering material being inserted between a tool and a plate of hot glass during glass heating, bending or tempering, said covering material comprises a textile fabric, said textile fabric comprising poly(p-phenylene-2,6-benzobisoxazole) fibers.

2. Use of a covering material as in claim 1, said textile fabric consists of poly(p-phenylene-2,6-benzobisoxazole) fibers.

3. Use of a covering material as in claim 1, said textile fabric further comprises fibers out of the group consisting of metal fibers, glass fibers, basalt fibers, ceramic fibers, C-fibers and SiC-fibers.

4. Use of a covering material as in claim 3, said textile fabric consisting of poly(p-phenylene-2,6-benzobisoxazole) fibers and metal fibers.

5. Use of a covering material as in claim 1 to 4, wherein said textile fabric is a knitted fabric.

6. Use of a covering material as in claim 5, wherein said knitted fabric is a weft knitted fabric.

7. Use of a covering material as in claim 5, wherein said knitted fabric is a warp knitted fabric.

8. Use of a covering material as in claim 6 to 7, wherein said knitted fabric is obtainable by knitting on a double bed knitting machine.

9. Use of a covering material as in claim 6 to 7, wherein said knitted fabric is obtainable by knitting on a single bed knitting machine.

10. Use of a covering material as in claim 5 to 9, wherein said knitted fabric is obtainable on a circular knitting machine.

11. Use of a covering material as in claim 5 to 9, wherein said knitted fabric is obtainable on a flat knitting machine.

12. Use of a covering material as in claim 5 to 11, wherein said knitted fabric is provided by a knitting structure, said knitted structure providing polygonal openings to said knitted fabric.

13. Use of a covering material as in claim 5 to 12, wherein said knitted structure comprises different zones, at least one of said zones comprises poly(p-phenylene-2,6-benzobisoxazole) fibers.

14. Use of a covering material as in claim 1 to 4, wherein said textile fabric is a woven fabric.

15. Use of a covering material as in claim 1 to 4, wherein said textile fabric is a braided fabric.

16. Use of a covering material as in claim 1 to 4, wherein said textile fabric is a needle punched fabric.

17. Use of a covering material as in claim 16, wherein said needle punched fabric Is a circular needle punched fabric.

18. Use of a covering material as in claim 16 to 17, wherein said needle punched fabric is calandered after needle punching operation.

19. Use of a covering material as in claim 16 to 18, wherein said needle punched fabric is perforated.

20. Use of a covering material as in claim 1 or 3 to 19, wherein said textile fabric has two outer surfaces, at least one of said outer surfaces comprising poly(p-phenylene-2,6-benzobisoxazole) fibers.

21. Use of a covering material as in claim 1 or 3 to 19, wherein said textile fabric has two outer surfaces, one of said outer surfaces comprising poly(p-phenylene-2,6-benzobisoxazole) fibers, the other of said outer surface consisting of metal fibers.

22. A method of moulding glass plates said method comprising the following steps:
- heating a glass plate to be moulded;
- moulding the hot glass plate;
- tempering the moulded glass plate;
- providing a textile fabric comprising poly(p-phenylene-2,6-benzobisoxazole) fibers;
- inserting said fabric between a tool and hot glass plate during said heating, said bending or said tempering.

23. A method of moulding glass plates as in claim 22, said textile fabric consists of poly(p-phenylene-2,6-benzobisoxazole) fibers.

24. A method of moulding glass plates as in claim 22, said textile fabric further comprises fibers out of the group consisting of metal fibers, glass fibers, basalt fibers, ceramic fibers, C-fibers and SiC-fibers.

25. A method of moulding glass plates as in claim 24, said textile fabric consisting of poly(p-phenylene-2,6-benzobisoxazole) fibers and metal fibers.

26. A method of moulding glass plates as in claim 22 to 25, wherein said textile fabric is a knitted fabric.

27. A method of moulding glass plates as in claim 26, wherein said knitted fabric is a weft knitted fabric.

28. A method of moulding glass plates as in claim 26, wherein said knitted fabric is a warp knitted fabric.

29. A method of moulding glass plates as in claim 27 to 28, wherein said knitted fabric is obtainable by knitting on a double bed knitting machine.

30. A method of moulding glass plates as in claim 27 to 28, wherein said knitted fabric is obtainable by knitting on a single bed knitting machine.

31. A method of moulding glass plates as in claim 26 to 30, wherein said knitted fabric is obtainable on a circular knitting machine.

32. A method of moulding glass plates as in claim 26 to 30, wherein said knitted fabric is obtainable on a flat knitting machine.

33. A method of moulding glass plates as in claim 26 to 32, wherein said knitted fabric is provided by a knitting structure, said knitted structure providing polygonal openings to said knitted fabric.

34. A method of moulding glass plates as in claim 26 to 32, wherein said knitted structure comprises different zones, at least one of said zones comprises poly(p-phenylene-2,6-benzobisoxazole) fibers.

35. A method of moulding glass plates as in claim 22 to 25, wherein said textile fabric is a woven fabric.

36. A method of moulding glass plates as in claim 22 to 25, wherein said textile fabric is a braided fabric.

37. A method of moulding glass plates as in claim 22 to 25, wherein said textile fabric is a needle punched fabric.

38. A method of moulding glass plates as in claim 37, wherein said needle punched fabric is a circular needle punched fabric.

39. A method of moulding glass plates as in claim 37 to 38, wherein said needle punched fabric is calandered after needle punching operation.

40. A method of moulding glass plates as in claim 37 to 39, wherein said needle punched fabric is perforated.

41. A method of moulding glass plates as in claim 22 or 24 to 40, wherein said textile fabric has two outer surfaces, at least one of said outer surfaces comprising poly(p-phenylene-2,6-benzobisoxazole) fibers.

42. A method of moulding glass plates as in claim 22 or 24 to 40, wherein said textile fabric has two outer surfaces, one of said outer surfaces comprising poly(p-phenylene-2,6-benzobisoxazole) fibers, the other of said outer surface consisting of metal fibers.

## Patentansprüche

1. Verwendung eines Abdeckmaterials, wobei das Abdeckmaterial zwischen ein Werkzeug und eine heiße Glasscheibe eingesetzt wird, während das Glas erhitzt, gebogen oder getempert wird, wobei das Abdeckmaterial eine Textilware aufweist, wobei die Textilware Poly(p-phenylen-2,6-benzobisoxazol)-Fasern aufweist.

2. Verwendung eines Abdeckmaterials nach Anspruch 1,
wobei die Textilware aus Poly(p-phenylen-2,6-benzobisoxazol)-Fasern besteht.

3. Verwendung eines Abdeckmaterials nach Anspruch 1,
wobei die Textilware ferner Fasern aus der Gruppe aufweist, die aus Metallfasern, Glasfasern, Basaltfasern, Keramikfasern, C-Fasern und SiC-Fasern besteht.

4. Verwendung eines Abdeckmaterials nach Anspruch 3,
wobei die Textilware aus Poly(p-phenylen-2,6-benzobisoxazol)-Fasern und Metallfasern besteht.

5. Verwendung eines Abdeckmaterials nach Anspruch 1 bis 4, worin die Textilware eine Strickware ist.

6. Verwendung eines Abdeckmaterials nach Anspruch 5, worin die Strickware eine Schussstrickware ist.

7. Verwendung eines Abdeckmaterials nach Anspruch 5, worin die Strickware eine Kettstrickware ist.

8. Verwendung eines Abdeckmaterials nach Anspruch 6 bis 7, worin die Strickware durch Stricken auf einer Doppelbettstrickmaschine erhältlich ist.

9. Verwendung eines Abdeckmaterials nach Anspruch 6 bis 7, worin die Strickware durch Stricken auf einer Einzelbettstrickmaschine erhältlich ist.

10. Verwendung eines Abdeckmaterials nach Anspruch 5 bis 9, worin die Strickware an einer Rundstrickmaschine erhältlich ist.

11. Verwendung eines Abdeckmaterials nach Anspruch 5 bis 9, worin die Strickware auf einer Flachstrickmaschine erhältlich ist.

12. Verwendung eines Abdeckmaterials nach Anspruch 5 bis 11, worin die Strickware durch eine Strickstruktur vorgesehen wird, wobei die Strickstruktur polygonale Öffnungen an der Strickware vorsieht.

13. Verwendung eines Abdeckmaterials nach Anspruch 5 bis 12, worin die Strickstruktur unterschiedliche Zonen aufweist, wobei zumindest eine der Zonen Poly(p-phenylen-2,6-benzobisoxazol)-Fasern aufweist.

14. Verwendung eines Abdeckmaterials nach Anspruch 1 bis 4, worin die Textilware ein Gewebe ist.

15. Verwendung eines Abdeckmaterials nach Anspruch 1 bis 4, worin die Textilware ein Geflecht ist.

16. Verwendung eines Abdeckmaterials nach Anspruch 1 bis 4, worin die Textilware eine genadelte Ware ist.

17. Verwendung eines Abdeckmaterials nach Anspruch 16, worin die genadelte Ware eine rundgenadelte Ware ist.

18. Verwendung eines Abdeckmaterials nach Anspruch 16 bis 17, worin die genadelte Ware nach dem Nadelvorgang kalandriert ist.

19. Verwendung eines Abdeckmaterials nach Anspruch 16 bis 18, worin die genadelte Ware perforiert ist.

20. Verwendung eines Abdeckmaterials nach Anspruch 1 oder 3 bis 19, worin die Textilware zwei Außenseiten aufweist, wobei zumindest eine der Außenseiten Poly(p-phenylen-2,6-benzobisoxazol)-Fasern aufweist.

21. Verwendung eines Abdeckmaterials nach Anspruch 1 oder 3 bis 19, worin die Textilware zwei Außenseiten aufweist, wobei eine der Außenseiten Poly(p-phenylen-2,6-benzobisoxazol)-Fasern aufweist, wobei die andere der Außenseiten aus Metallfasern besteht.

22. Verfahren der Formung von Glasscheiben, wobei das Verfahren die folgenden Schritte aufweist:
- Erhitzen einer Glasscheibe zur Formung;
- Formen der heißen Glasscheibe;
- Tempern der geformten Glasscheibe;
- Vorsehen einer Textilware aus Poly(p-phenylen-2,6-benzobisoxazol)-Fasern;
- Einsetzen der Ware zwischen ein Werkzeug und die heiße Glasscheibe während des Erhitzens, des Biegens oder des Temperns.

23. Verfahren der Formung von Glasscheiben nach Anspruch 22, worin die Textilware aus Poly(p-phenylen-2,6-benzobisoxazol)-Fasern besteht.

24. Verfahren der Formung von Glasscheiben nach Anspruch 22, wobei die Textilware ferner Fasern aus der Gruppe aufweist, die aus Metallfasern, Glasfasern, Basaltfasern, Keramikfasern, C-Fasern und SiC-Fasern besteht.

25. Verfahren der Formung von Glasscheiben nach Anspruch 24, wobei die Textilware aus Poly(p-phenylen-2,6-benzobisoxazol)-Fasern und Metallfasern besteht.

26. Verfahren der Formung von Glasscheiben nach Anspruch 22 bis 25, worin die Textilware eine Strickware ist.

27. Verfahren der Formung von Glasscheiben nach Anspruch 26, worin die Strickware eine Schussstrickware ist.

28. Verfahren der Formung von Glasscheiben nach Anspruch 26, worin die Strickware eine Kettstrickware ist.

29. Verfahren der Formung von Glasscheiben nach Anspruch 27 bis 28, worin die Strickware durch Stricken auf einer Doppelbettstrickmaschine erhältlich ist.

30. Verfahren der Formung von Glasscheiben nach Anspruch 27 bis 28, worin die Strickware durch Stricken auf einer Einzelbettstrickmaschine erhältlich ist.

31. Verfahren der Formung von Glasscheiben nach Anspruch 26 bis 30, worin die Strickware an einer Rundstrickmaschine erhältlich ist.

32. Verfahren der Formung von Glasscheiben nach Anspruch 26 bis 30, worin die Strickware auf einer Flachstrickmaschine erhältlich ist.

33. Verfahren der Formung von Glasscheiben nach Anspruch 26 bis 32, worin die Strickware durch eine Strickstruktur vorgesehen wird, wobei die Strickstruktur polygonale Öffnungen an der Strickware vorsieht.

34. Verfahren der Formung von Glasscheiben nach Anspruch 26 bis 32, worin die Strickstruktur unterschiedliche Zonen aufweist, wobei zumindest eine der Zonen Poly(p-phenylen-2,6-benzobisoxazol)-Fasern aufweist.

35. Verfahren der Formung von Glasscheiben nach Anspruch 22 bis 25, worin die Textilware ein Gewebe ist.

36. Verfahren der Formung von Glasscheiben nach Anspruch 22 bis 25, worin die Textilware ein Geflecht ist.

37. Verfahren der Formung von Glasscheiben nach Anspruch 22 bis 25, worin die Textilware eine genadelte Ware ist.

38. Verfahren der Formung von Glasscheiben nach Anspruch 37, worin die genadelte Ware eine rundgenadelte Ware ist.

39. Verfahren der Formung von Glasscheiben nach Anspruch 37 bis 38, worin die genadelte Ware nach dem Nadelvorgang kalandriert ist.

40. Verfahren der Formung von Glasscheiben nach Anspruch 37 bis 39, worin die genadelte Ware perforiert ist.

41. Verfahren der Formung von Glasscheiben nach Anspruch 22 oder 24 bis 40, worin die Textilware zwei Außenseiten aufweist, wobei zumindest eine der Außenseiten Poly(p-phenylen-2,6-benzobisoxazol)-Fasern aufweist.

42. Verfahren der Formung von Glasscheiben nach Anspruch 22 oder 24 bis 40, worin die Textilware zwei Außenseiten aufweist, wobei eine der Außenseiten Poly(p-phenylen-2,6-benzobisoxazol)-Fasern aufweist, wobei die andere der Außenseiten aus Metallfasern besteht.

## Revendications

1. Utilisation d'un matériau de revêtement, ledit matériau de revêtement étant inséré entre un instrument et une plaque de verre chaud au cours d'une opération de réchauffage, de bombage ou de trempe du verre, ledit matériau de revêtement comprenant un tissu, ledit tissu contenant des fibres de poly(p-phénylène-2,6-benzobisoxazole).

2. Utilisation d'un matériau de revêtement suivant la revendication 1, ledit tissu se composant de fibres de poly(p-phénylène-2,6-benzobisoxazole).

3. Utilisation d'un matériau de revêtement suivant la revendication 1, ledit tissu contenant en outre des fibres appartenant au groupe composé de fibres métalliques, de fibres de verre, de fibres de basalte, de fibres céramiques, de fibres de carbone et de fibres de SiC.

4. Utilisation d'un matériau de revêtement suivant la revendication 3, ledit tissu se composant de fibres de poly(p-phénylène-2,6-benzobisoxazole) et de fibres métalliques.

5. Utilisation d'un matériau de revêtement suivant la revendication 1 à 4, dans lequel ledit tissu est un tricot.

6. Utilisation d'un matériau de revêtement suivant la revendication 5, dans lequel ledit tricot est un tricot à mailles cueillies.

7. Utilisation d'un matériau de revêtement suivant la revendication 5, dans lequel ledit tricot est un tricot à mailles jetées.

8. Utilisation d'un matériau de revêtement suivant la revendication 6 ou 7, dans lequel ledit tricot peut être obtenu par tricotage sur une machine à tricoter à double fonture.

9. Utilisation d'un matériau de revêtement suivant la revendication 6 ou 7, dans lequel ledit tricot peut être obtenu par tricotage sur une machine à tricoter à simple fonture.

10. Utilisation d'un matériau de revêtement suivant les revendications 5 à 9, dans lequel ledit tricot peut être obtenu sur une machine à tricoter circulaire.

11. Utilisation d'un matériau de revêtement suivant les revendications 5 à 9, dans lequel ledit tricot peut être obtenu sur une machine à tricoter rectiligne.

12. Utilisation d'un matériau de revêtement suivant les revendications 5 à 11, dans lequel ledit tricot est fourni par une structure de tricotage, ladite structure de tricotage pourvoyant le tissu tricoté d'ouvertures polygonales.

13. Utilisation d'un matériau de revêtement suivant les revendications 5 à 12, dans lequel ladite structure de tricotage comprend différentes zones, au moins une desdites zones comprenant des fibres de poly(p-phénylène-2,6-benzobisoxazole).

14. Utilisation d'un matériau de revêtement suivant les revendications 1 à 4, dans lequel ledit tissu est un tissé.

15. Utilisation d'un matériau de revêtement suivant les revendications 1 à 4, dans lequel ledit tissu est un tissu tressé.

16. Utilisation d'un matériau de revêtement suivant les revendications 1 à 4, dans lequel ledit tissu est un tissu aiguilleté.

17. Utilisation d'un matériau de revêtement suivant la revendication 16, dans lequel ledit tissu aiguilleté est un tissu aiguilleté circulaire.

18. Utilisation d'un matériau de revêtement suivant la revendication 16 ou 17, dans lequel ledit tissu aiguilleté est calandré après l'opération d'aiguilletage.

19. Utilisation d'un matériau de revêtement suivant les revendications 16 à 18, dans lequel ledit tissu aiguilleté est perforé.

20. Utilisation d'un matériau de revêtement suivant les revendications 1 ou 3 à 19, dans lequel ledit tissu possède deux surfaces extérieures, dont au moins l'une desdites surfaces extérieures comprend des fibres de poly(p-phénylène-2,3-benzobisoxazole).

21. Utilisation d'un matériau de revêtement suivant les revendications 1 ou 3 à 19, dans lequel ledit tissu possède deux surfaces extérieures, l'une desdites surfaces extérieures comprenant des fibres de poly(p-phénylène-2,3-benzobisoxazole), l'autre desdites surfaces extérieures se composant de fibres métalliques.

22. Une méthode de bombage de plaques de verre, ladite méthode comprenant les étapes suivantes:
- réchauffage de la plaque de verre à bomber;
- bombage de la plaque de verre chaude;
- trempe de la plaque de verre bombée;
- fourniture d'un tissu comprenant des fibres de poly(p-phénylène-2,6-benzobisoxazole);
- insertion dudit tissu entre l'instrument et la plaque de verre chaude au cours dudit
chauffage, dudit bombage et de ladite trempe.

23. Une méthode de bombage de plaques de verre suivant la revendication 22, ledit tissu se composant de fibres de poly(p-phénylène-2,6-benzobisoxazole).

24. Une méthode de bombage de plaques de verre suivant la revendication 22, ledit tissu comprenant en outre des fibres appartenant au groupe composé de fibres métalliques, de fibres de verre, de fibres de basalte, de fibres céramiques, de fibres de carbone et de fibres de SiC.

25. Une méthode de bombage de plaques de verre suivant la revendication 24, ledit tissu se composant de fibres de poly(p-phénylène-2,6-benzobisoxazole) et de fibres métalliques.

26. Une méthode de bombage de plaques de verre suivant les revendications 22 à 25, dans laquelle ledit tissu est un tricot.

27. Une méthode de bombage de plaques de verre suivant la revendication 26, dans laquelle ledit tricot est un tricot à mailles cueillies.

28. Une méthode de bombage de plaques de verre suivant la revendication 26, dans laquelle ledit tricot est un tricot à mailles jetées.

29. Une méthode de bombage de plaques de verre suivant les revendications 27 à 28, dans laquelle ledit tricot peut être obtenu sur une machine à tricoter à double fonture.

30. Une méthode de bombage de plaques de verre suivant les revendications 27 à 28, dans laquelle ledit tricot peut être obtenu sur une machine à tricoter à simple fonture.

31. Une méthode de bombage de plaques de verre suivant les revendications 26 à 30, dans laquelle ledit tricot peut être obtenu sur une machine à tricoter circulaire.

32. Une méthode de bombage de plaques de verre suivant les revendications 26 à 30, dans laquelle ledit tricot peut être obtenu sur une machine à tricoter rectiligne.

33. Une méthode de bombage de plaques de verre suivant les revendications 26 à 32, dans laquelle ledit tricot est fourni par une structure de tricotage, ladite structure de tricotage pourvoyant ledit tricot d'ouvertures polygonales.

34. Une méthode de bombage de plaques de verre suivant les revendications 26 à 32, dans laquelle ladite structure de tricotage comprend différentes zones, dont au moins une comprend des fibres de poly(p-phénylène-2,6-benzobisoxazole).

35. Une méthode de bombage de plaques de verre suivant les revendications 22 à 25, dans laquelle le tissu est un tissé.

36. Une méthode de bombage de plaques de verre suivant les revendications 22 à 25, dans laquelle ledit tissu est un tissu tressé.

37. Une méthode de bombage de plaques de verre suivant les revendications 22 à 25, dans laquelle ledit tissu est une tissu aiguilleté.

38. Une méthode de bombage de plaques de verre suivant la revendication 37, dans laquelle ledit tissu aiguilleté est un tissu aiguilleté circulaire.

39. Une méthode de bombage de plaques de verre suivant les revendications 37 à 38, dans laquelle ledit tissu aiguilleté est calandré après l'opération d'aiguilletage.

40. Une méthode de bombage de plaques de verre suivant les revendications 37 à 39, dans laquelle ledit tissu aiguilleté est perforé.

41. Une méthode de bombage de plaques de verre suivant les revendications 22 ou 24 à 40, dans laquelle ledit tissu possède deux surfaces extérieures, dont au moins une comprend des fibres de poly(p-phénylène-2,6-benzobisoxazole).

42. Une méthode de bombage de plaques de verre suivant les revendications 22 ou 24 à 40, dans laquelle ledit tissu possède deux surfaces, dont l'une comprend des fibres de poly(p-phénylène-2,6-benzobisoxazole) tandis que l'autre se compose de fibres métalliques.
